# EUROPÄISCHE PATENTSCHRIFT

(11) **EP 2 489 260 B1**
(45) Veröffentlichungstag und Bekanntmachung des Hinweises auf die Patenterteilung: **09.10.2013**
(21) Anmeldenummer: 12001050.9
(22) Anmeldetag: 17.02.2012
(51) Int. Cl.: A01K 7/02, A01K 9/00, A01J 9/00

(54) **Vorrichtung zum Temperieren von Kolostralmilch**
Method for tempering colostrum milk
Dispositif de tempérage du premier lait de jument

(30) Priorität: 17.02.2011 DE 202011002999 U
(43) Veröffentlichungstag der Anmeldung: 22.08.2012
(73) Patentinhaber: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patent- und Rechtsanwälte

(56) Entgegenhaltungen:
- EP-A2- 1 897 438
- GB-A- 337 612
- GB-A- 582 294
- JP-A- 2002 360 423

## Beschreibung

Bei der Aufzucht von Nutztieren, insbesondere Kälbern, werden die Jungtiere üblicherweise mit Hilfe einer Trinkflasche oder eines Nuckeleimers in ihren Boxen mit Milch versorgt. Um die Milch zu verteilen, werden häufig Milchwagen eingesetzt, die einen Milchbehälter mit einem Fassungsvermögen von beispielsweise mehreren 100 Litern aufweisen und die Milch mit Hilfe einer Heizung auf einer für die Fütterung optimalen Temperatur halten können. Ein derartiger Milchwagen ist beispielsweise in der Druckschrift EP 1 897 438 A2 beschrieben.

Besondere Anforderungen bestehen, wenn unter den zu versorgenden Jungtieren auch wenige Tage alte Neugeborene sind, die mit sogenannter Kolostralmilch, d.h. der in den ersten Tagen nach der Geburt von den Muttertieren produzierten Milch (bei Kühen auch Biestmilch genannt) versorgt werden sollen. Wegen der vergleichsweise geringen Mengen kann diese Kolostralmilch nicht mit den bekannten Milchwagen zu den Kälbern gebracht werden. Da die richtige Temperatur bei dieser Milch dennoch besonders wichtig ist, werden häufig mit der Kolostralmilch gefüllte Aufzuchtflaschen in einem Wasserbad temperiert und anschließend zu den Neugeborenen gebracht. Dieses Vorgehen erfordert jedoch einen hohen zusätzlichen Aufwand und stellt insbesondere bei niedrigen Außentemperaturen nicht immer sicher, dass die Kolostralmilch mit der richtigen Trinktemperatur zu den Neugeborenen gelangt.

Davon ausgehend ist es die Aufgabe der Erfindung, eine Vorrichtung zum Temperieren von Kolostralmilch zur Verfügung zu stellen, die die betrieblichen Abläufe und das Einhalten der richtigen Trinktemperatur der Kolostralmilch vereinfacht. Diese Aufgabe wird gelöst durch die Vorrichtung zum Temperieren von Kolostralmilch mit den Merkmalen des Anspruchs 1. Vorteilhafte Ausgestaltungen sind in den sich anschließenden Unteransprüchen angegeben.

Die Vorrichtung zum Temperieren von Kolostralmilch hat
- einen Außenbehälter, der einen Boden, einen unteren Abschnitt und einen oberen, sich nach oben zu einer Öffnung hin verjüngenden Abschnitt aufweist, und
- einen Innenbehälter, der einen Boden, einen zylindrischen Abschnitt und einen umlaufenden Wulst aufweist, wobei der zylindrische Abschnitt einen kleineren Durchmesser und der Wulst einen größeren Durchmesser als die Öffnung des Außenbehälters aufweist und der Wulst einen Abstand von dem Boden des Innenbehälters aufweist, der kleiner ist als der Abstand zwischen einem oberen Rand der Öffnung und dem Boden des Außenbehälters.

Im Gebrauch wird der Außenbehälter mit warmem Wasser gefüllt und der mit der Kolostralmilch gefüllte Innenbehälter wird in die Öffnung des Außenbehälters eingesetzt. Dann befindet sich der Innenbehälter mit der Kolostralmilch in einem Wasserbad, wobei die genannten Abmessungsverhältnisse dazu führen, dass der Innenbehälter einfach in die Öffnung des Außenbehälters eingesetzt werden kann, bis der umlaufende Wulst des Innenbehälters am Öffnungsrand des Außenbehälters anliegt. In dieser Position befindet sich der Boden des Innenbehälters in einem Abstand vom Boden des Außenbehälters, so dass der Innenbehälter am Boden und seinen seitlichen Wänden von dem Wasserbad umgeben ist. Möglich ist auch ein umgekehrtes Vorgehen, also ein Befüllen des Außenbehälters mit der Kolostralmilch und des Innenbehälters mit warmem Wasser.

Durch die Form des Außenbehälters mit einem relativ weiten, unteren Abschnitt und einem sich zu der Öffnung hin verjüngenden oberen Abschnitt befindet sich eine ausreichende Wassermenge in dem Außenbehälter. Durch das Einsetzen des Innenbehälters und den umlaufenden, am Öffnungsrand des Außenbehälters anliegenden Wulst wird beim Transport der Vorrichtung verhindert, dass Wasser aus dem Außenbehälter heraus und insbesondere in den Innenbehälter hineinspritzt. Gleichzeitig wird ein Umkippen des Innenbehälters verhindert.

Insgesamt kann die Kolostralmilch mit der Vorrichtung einfach auf die richtige Temperatur gebracht und für einen längeren Zeitraum, der für den Transport der Vorrichtung zu den zu versorgenden Jungtieren ausreicht, gehalten werden. Um stets die richtige Trinktemperatur sicherzustellen, kann die Temperatur des in den Außenbehälter eingefüllten Wassers entsprechend gewählt und auf die Ausgangstemperatur der Kolostralmilch und/oder die Außentemperatur abgestimmt werden.

Das Reinigen der Vorrichtung ist ebenfalls besonders einfach, weil nur der Innenbehälter in Berührung mit der Kolostralmilch kommt. Er kann sehr einfach gereinigt werden, insbesondere in einer Spülmaschine.

In einer Ausgestaltung weist die Öffnung des Außenbehälters einen zylindrischen Abschnitt mit einer Höhe von 2 cm oder mehr auf. Insbesondere mit einem auf den Durchmesser der Öffnung in dem zylindrischen Abschnitt abgestimmten Innenbehälter wirkt dies einem Umkippen des Innenbehälters entgegen. Dies gilt auch dann, wenn der Innenbehälter in dem Außenbehälter aufschwimmt, etwa wenn sich nur wenig Kolostralmilch in dem Innenbehälter befindet. Dann kann der Innenbehälter mit dem zylindrischen Abschnitt in der Öffnung des Außenbehälters geführt werden und sich nach oben bewegen, ohne über ein bestimmtes Maß hinaus gegenüber dem Außenbehälter zu verkippen.

In einer Ausgestaltung besteht der Außenbehälter aus Kunststoff. Herkömmliche Kunststoffmaterialien weisen eine relativ geringe Wärmeleitfähigkeit auf, so dass warmes Wasser im Außenbehälter selbst bei geringen Außentemperaturen nur langsam abkühlt. Die Kolostralmilch kann daher relativ lange auf einer gewünschten Temperatur gehalten werden.

In einer Ausgestaltung weist der Außenbehälter ein transparentes Material auf. Das transparente Material befindet sich insbesondere am unteren und/oder oberen Abschnitt des Außenbehälters und ermöglicht eine Füllstandskontrolle von außen. Dies vereinfacht, den Außenbehälter bis zur richtigen Höhe mit warmem Wasser zu füllen, so dass der Innenbehälter nach dem Einsetzen in die Öffnung des Außenbehälters möglichst vollständig von dem warmen Wasser umgeben ist, ohne dass der Außenbehälter überläuft.

In einer Ausgestaltung weist der Außenbehälter eine Füllstandsmarkierung auf, die einen Füllstand für den Außenbehälter ohne eingesetzten Innenbehälter markiert, bei dem sich nach dem Einsetzen des Innenbehälters ein Füllstand des Außenbehälters bis knapp unter den Öffnungsrand ergibt. Diese Füllstandsmarkierung vereinfacht das Befüllen des Außenbehälters mit warmem Wasser bis zur optimalen Höhe. Ohne eine solche Füllstandsmarkierung lässt sich nur schwer abschätzen, bis wohin der Außenbehälter gefüllt werden sollte.

In einer Ausgestaltung ist eine Verriegelung vorhanden ist, die ein Aufschwimmen des Innenbehälters verhindert. Die Verriegelung verhindert, dass sich ein in den Außenbehälter eingesetzter Innenbehälter nach oben bewegen kann. Dies ermöglicht einen höheren Füllstand des Außenbehälters, also unter Umständen ein besseres Temperieren der Kolostralmilch und ein längeres Halten einer gewünschten Temperatur. Außerdem wird der Transport der Vorrichtung durch das Fixieren des Innenbehälters in seiner eingesetzten Position vereinfacht.

In einer Ausgestaltung umfasst die Verriegelung einen Anschlag am Außenbehälter und einen mit dem Anschlag zusammenwirkenden Rasthaken am Innenbehälter oder umgekehrt. Dies stellt einen besonders einfachen und funktionalen Verriegelungsmechanismus dar. Die Verriegelung kann beim Einsetzten des Innenbehälters automatisch einhaken. Der Anschlag kann beispielsweise von einem umlaufenden Rand oder Vorsprung an dem jeweiligen Behälter gebildet sein, der insbesondere im Bereich der jeweiligen Behälteröffnung flanschartig umläuft, so dass er unabhängig von einer relativen Drehstellung der beiden Behälter zueinander wirksam wird. Der Rasthaken können gegen die Kraft einer Feder verlagerbar sein. Bevorzugt ist er am Innenbehälter ausgebildet, denn dies kann ein Verlagern des Rasthakens zum Entriegeln beim Entnehmen des Innenbehälters vereinfachen. Es können mehrere, insbesondere zwei bezüglich einer Öffnung gegenüberliegende Rasthaken vorhanden sein.

In einer Ausgestaltung weist der Außenbehälter ein Fassungsvermögen von 20 Litern bis 40 Litern auf, bevorzugt von ungefähr 30 Litern. Er enthält dann eine ausreichende Menge warmen Wassers, um die Kolostralmilch im Innenbehälter zu temperieren. Gleichzeitig lässt er sich auch im gefüllten Zustand noch einfach transportieren.

In einer Ausgestaltung ist der obere Abschnitt des Außenbehälters konisch, verjüngt sich zur Öffnung hin also gleichmäßig. Dies kann die Handhabung des Außenbehälters insbesondere beim Ausleeren vereinfachen. In einer Ausgestaltung ist der Durchmesser des unteren Abschnitts des Außenbehälters etwa doppelt so groß wie der Durchmesser der Öffnung des Außenbehälters. Bei diesen Größenverhältnissen wird der Innenbehälter, dessen Durchmesser auf den Durchmesser der Öffnung abgestimmt ist, von einer ausreichenden Wassermenge umgeben.

In einer Ausgestaltung ist der untere Abschnitt des Außenbehälters kreiszylindrisch. Der kreiszylindrische Abschnitt kann sich bis zum Boden des Außenbehälters erstrecken. Dies führt zu einer guten Handhabbarkeit des Außenbehälters und insbesondere zu einer hohen Standfestigkeit. Dies trägt wesentlich dazu bei, dass die gesamte Vorrichtung einfach transportiert werden kann, insbesondere auf einer sich im Gebrauch möglicherweise neigenden Ladefläche eines Milchwagens.

In einer Ausgestaltung weist der obere Abschnitt des Außenbehälters eine geringere Höhe auf als der untere Abschnitt des Außenbehälters. Dadurch weist der Außenbehälter trotz der Verjüngung des oberen Abschnitts ein relativ großes Fassungsvermögen auf.

In einer Ausgestaltung weist der Außenbehälter einen Henkel auf. An dem Henkel kann der Außenbehälter einschließlich des eingesetzten Innenbehälters einfach getragen werden.

In einer Ausgestaltung ist der Henkel schwenkbar ist und Außenbehälter und Henkel sind so ausgebildet, dass der Henkel in einer für das Tragen des Außenbehälters geeigneten, aufgerichteten Stellung einrasten kann. Dies vereinfacht ein Absetzen und erneutes Anheben der Vorrichtung.

In einer Ausgestaltung weist der Henkel mindestens einen, gemeinsam mit dem Henkel schwenkbaren Abschnitt aufweist, der in der aufgerichteten Stellung des Henkelsmit einem Anschlag am Innenbehälter zusammenwirkt, um ein Aufschwimmen des Innenbehälters zu verhindern. Dies stellt eine besonders zweckmäßige Form der vorstehend erläuterten Verriegelung dar.

In einer Ausgestaltung sind am oberen Abschnitt des Außenbehälters zwei gegenüberliegende Stege angeordnet, in die jeweils ein Ende des Henkels eingehängt ist. Die Stege können so angeordnet sein, dass sie einschließlich der Enden eines eingesetzten Henkels nicht über den Außendurchmesser des unteren Abschnitts des Außenbehälters überstehen. Durch die Verwendung von Stegen wird die Stabilität des Außenbehälters durch die Aufnahmen für die Enden des Henkels nicht beeinträchtigt.

In einer Ausgestaltung ist der Innenbehälter aus Metall, insbesondere aus Edelstahl. Dadurch ist der Innenbehälter besonders robust, einfach zu reinigen und erfüllt alle hygienischen Anforderungen. Außerdem zeichnet sich ein Innenbehälter aus Metall durch eine gute Wärmeleitfähigkeit aus, was einen schnellen Wärmeaustausch zwischen dem Wasserbad und der Kolostralmilch begünstigt.

In einer Ausgestaltung weist der Innenbehälter ein Fassungsvermögen von 5 Litern bis 10 Litern auf. Besonders bevorzugt ist ein Fassungsvermögen von ungefähr 8 Litern. Bei diesem Fassungsvermögen kann der Innenbehälter Kolostralmilch für mehrere Jungtiere, beispielsweise für zwei Kälber, aufnehmen. Gleichzeitig kann die genannte Menge Kolostralmilch einfach im Wasserbad temperiert werden.

In einer Ausgestaltung ist der Durchmesser des zylindrischen Abschnitts des Innenbehälters nur wenig kleiner als der Innendurchmesser der Öffnung des Außenbehälters. Der Unterschied der genannten Durchmesser kann sich beispielsweise im Bereich von 2 mm bis 20 mm befinden. Bevorzugt wird ein um ungefähr 1 cm kleinerer Außendurchmesser des zylindrischen Abschnitts des Innenbehälters als des Innendurchmessers der Öffnung des Außenbehälters. Bei diesen Größenverhältnissen kann der Innenbehälter sehr einfach in den Außenbehälter eingesetzt werden, ohne dass an einem verbleibenden Spalt zwischen Innenbehälter und Öffnungsrand größere Wärmemengen verloren gehen oder Wasser aus dem Außenbehälter austritt. Die Abstimmung der genannten Durchmesser aufeinander wirkt außerdem, wie bereits oben erläutert, einem Verkippen des Innenbehälters im Außenbehälter entgegen.

In einer Ausgestaltung ist der Wulst des Innenbehälters von einer Ausbuchtung einer Wandung des Innenbehälters gebildet. Grundsätzlich kann der Wulst auch von einem mit dem Innenbehälter verbundenen Ring oder Flansch oder dergleichen gebildet sein. Das Ausbilden eines Wulstes am Innenbehälter ist relativ einfach als Ausbuchtung, also durch Verformen, insbesondere bei einem Innenbehälter aus Metall, möglich. Es ist auch unter hygienischen Gesichtspunkten besonders vorteilhaft, weil anders als bei miteinander verbundenen Teilen keine Spalte auftreten.

In einer Ausgestaltung weist der Innenbehälter oberhalb des Wulstes einen weiteren zylindrischen Abschnitt auf. Bei in den Außenbehälter eingesetztem Innenbehälter befindet sich der weitere zylindrische Abschnitt oberhalb des Öffnungsrands des Außenbehälters. Der weitere zylindrische Abschnitt kann die Handhabung des Innenbehälters vereinfachen.

In einer Ausgestaltung weist der Innenbehälter einen Henkel auf, der an dem weiteren zylindrischen Abschnitt des Innenbehälters befestigt ist. Grundsätzlich kann der Innenbehälter auch auf sonstige Weise mit einem geeigneten Henkel versehen werden, beispielsweise mit einem an dem Wulst befestigten Henkel. An einem weiteren zylindrischen Abschnitt lässt sich der Henkel jedoch besonders einfach befestigen.

In einer Ausgestaltung weist der Innenbehälter oberhalb des Wulstes einen nach außen umgebördelten Rand auf. Der umgebördelte Rand kann insbesondere am oberen Ende des weiteren zylindrischen Abschnitts ausgebildet sein. Durch den Rand werden scharfe Kanten am oberen Ende des Innenbehälters vermieden. Gleichzeitig kann die Handhabung und das Ausgießverhalten des Innenbehälters verbessert werden.

In einer Ausgestaltung weist der Wulst unterhalb seines maximalen Durchmessers einen sich nach unten verjüngenden, konischen Abschnitt auf. Im in den Außenbehälter eingesetzten Zustand liegt der Innenbehälter mit diesem konischen Abschnitt am Öffnungsrand des Außenbehälters an. Durch den konischen Abschnitt können auch größere Toleranzen im Durchmesser der Öffnung des Außenbehälters ausgeglichen werden. Stets liegt der Wulst optimal am Öffnungsrand an.

In einer Ausgestaltung weist der konische Abschnitt einen Öffnungswinkel im Bereich von 30° bis 60° auf. Mit Öffnungswinkel wird der Winkel zwischen zwei diametral gegenüberliegenden Linien auf dem konischen Abschnitt bezeichnet, also das Doppelte des Winkels zwischen der Längsachse des Innenbehälters und einer Fläche des konischen Abschnitts. Bei einem Öffnungswinkel im genannten Bereich liegt der konische Abschnitt gut am Öffnungsrand an, ohne sich zu verkanten.

In einer Ausgestaltung weist der Innenbehälter einen Deckel auf. Der Deckel kann Verschmutzungen der im Innenbehälter befindlichen Kolostralmilch verhindern und außerdem ein Abkühlen verlangsamen.

Die Erfindung wird nachfolgend anhand eines in vier Figuren dargestellten Ausführungsbeispiels näher erläutert. Es zeigen:
- Fig. 1: einen Außenbehälter einer erfindungsgemäßen Vorrichtung zum Temperieren von Kolostralmilch in einer perspektivischen Ansicht,
- Fig. 2: einen Innenbehälter der erfindungsgemäßen Vorrichtung zum Temperieren von Kolostralmilch in einer perspektivischen Ansicht,
- Fig. 3: den Innenbehälter aus Fig. 2 im in den Außenbehälter aus Fig. 1 eingesetzten Zustand in einer Schnittdarstellung,
- Fig. 4: den Innenbehälter aus Fig. 2 in einer Draufsicht von der Seite.

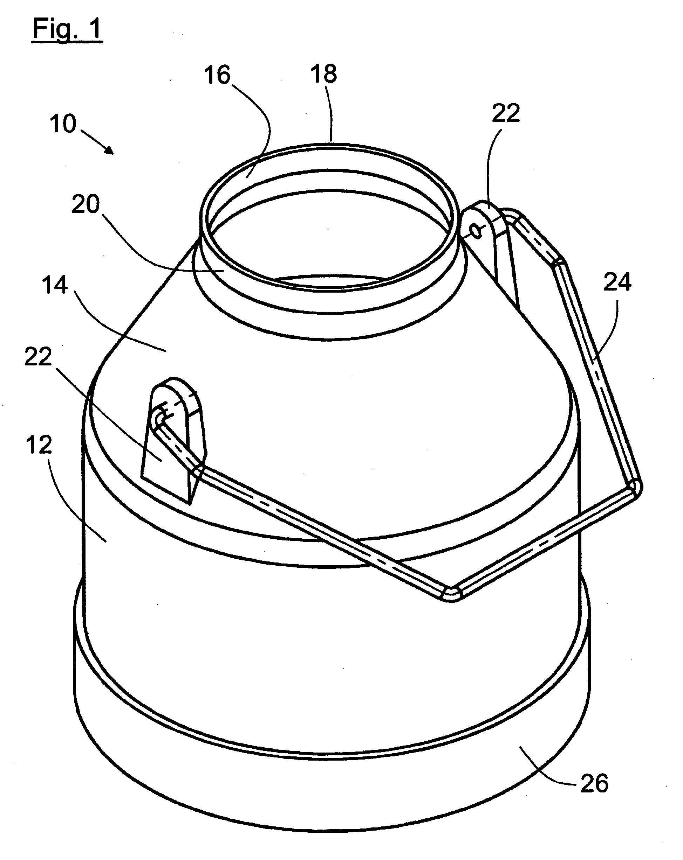

Der in Fig. 1 gezeigte Außenbehälter 10 gleicht im Wesentlichen einer herkömmlichen Milchkanne. Er weist ein Fassungsvermögen von 30 Litern auf. Der Außenbehälter 10 hat einen unteren Abschnitt 12, der kreiszylindrisch ist und unten von einem in der Fig. 1 nicht sichtbaren Boden 28 verschlossen ist.

An den unteren Abschnitt 12 schließt sich oben ein oberer Abschnitt 14 an, der sich nach oben hin zu einer Öffnung 16 verjüngt. Der obere Abschnitt 14 ist konisch. Die Öffnung 16 hat einen Öffnungsrand 18 und einen zylindrischen Abschnitt 20, der eine Höhe von ungefähr 2 cm aufweist.

Am oberen Abschnitt 14 befinden sich zwei diametral gegenüberliegende Stege 22, in die jeweils eines der beiden Enden eines Henkels 24 eingehängt ist.

Der Durchmesser des unteren Abschnitts 12 ist etwa doppelt so groß wie der Durchmesser der Öffnung 16. Am unteren Ende des unteren Abschnitts 12 ist ein zylindrischer Ring 26 angeordnet, in den das untere Ende des unteren Abschnitts 12 eingesetzt ist.

Mit Ausnahme des Rings 26 und des Henkels 24 besteht der Außenbehälter 10 vollständig aus einem transparenten Kunststoffmaterial. Der Ring 26 besteht aus einem eingefärbten Kunststoffmaterial und der Henkel 24 aus Metall.

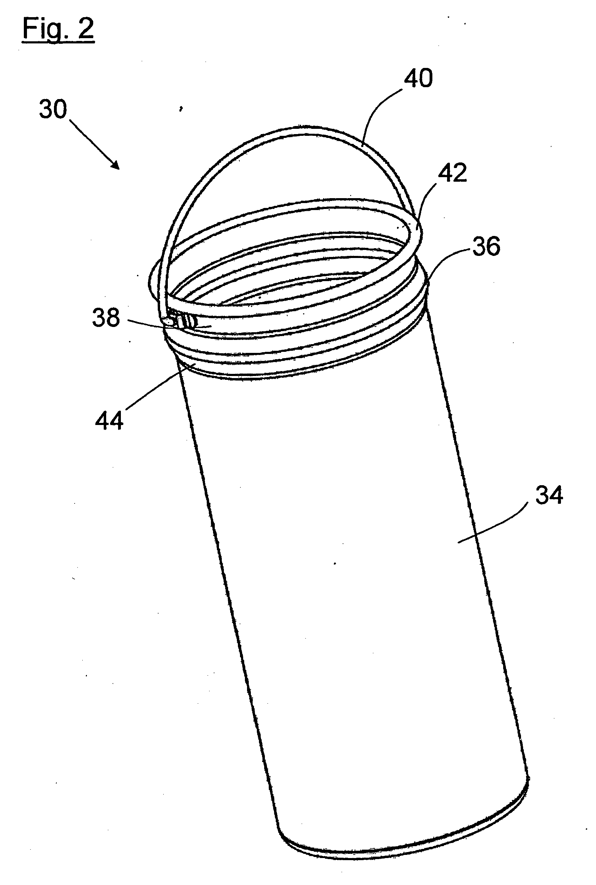

Der in der Fig. 2 gezeigte Innenbehälter 30 besteht aus Edelstahl und weist einen Boden 32 (in Fig. 2 nicht erkennbar), einen zylindrischen Abschnitt 34 und einen umlaufenden Wulst 36 auf. Der zylindrische Abschnitt 34 erstreckt sich von dem Boden 32 bis zu dem umlaufenden Wulst 36, der in Umfangsrichtung ringförmig umläuft. Oberhalb des Wulstes 36 befindet sich ein weiterer zylindrischer Abschnitt 38, der denselben Durchmesser aufweist wie der zylindrische Abschnitt 34. Der Innenbehälter 30 weist ein Fassungsvermögen von 8 Litern auf.

An dem weiteren zylindrischen Abschnitt 38 ist ein halbkreisförmiger Henkel 40 befestigt. Das obere Ende des weiteren zylindrischen Abschnitts 38 ist nach außen zu einem Rand 42 umgebördelt.

Der Wulst 36 ist von einer Ausbuchtung des Innenbehälters 30 gebildet. Er weist in seiner Mitte einen maximalen Durchmesser und unterhalb davon einen konischen Abschnitt 44 auf, der sich nach unten bis auf den Durchmesser des zylindrischen Abschnitts 34 verjüngt.

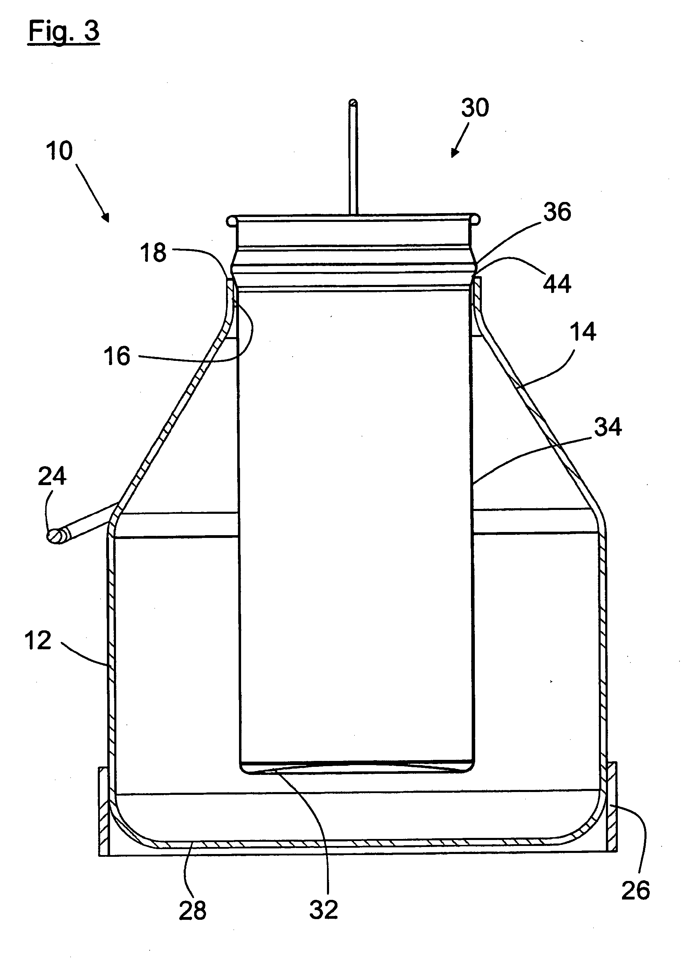

In der Fig. 3 ist das Zusammenwirken von Außenbehälter 10 und Innenbehälter 30 dargestellt. In der Querschnittsansicht wird deutlich, dass der Innenbehälter 30 mit dem konischen Abschnitt 44 seines Wulstes 36 am oberen Rand 18 der Öffnung 16 des Außenbehälters 10 anliegt. Weil der Abstand des Wulstes 36 vom Boden 32 des Innenbehälters 30 kleiner ist als der Abstand der Öffnung 16 bzw. des oberen Randes 18 der Öffnung 16 vom Boden 28 des Außenbehälters 10 befindet sich der Boden 32 des Innenbehälters 30 in dieser Anordnung in einem Abstand vom Boden 28 des Außenbehälters 10. Außerdem ist der Durchmesser des unteren Abschnitts 12 des Außenbehälters 10 etwa doppelt so groß wie der Durchmesser des zylindrischen Abschnitts 34 des Innenbehälters, so dass der Innenbehälter 30 auch an seinen äußeren Wandungen von in dem Außenbehälter 10 befindlichem warmen Wasser umgeben ist.

In der Fig. 3 ebenfalls gut erkennbar ist der nach außen umgebördelte Rand 42 des Innenbehälters 30. Der Ring 26 des Außenbehälters 10 steht nach unten etwas über den Boden 28 des Außenbehälters 10 über.

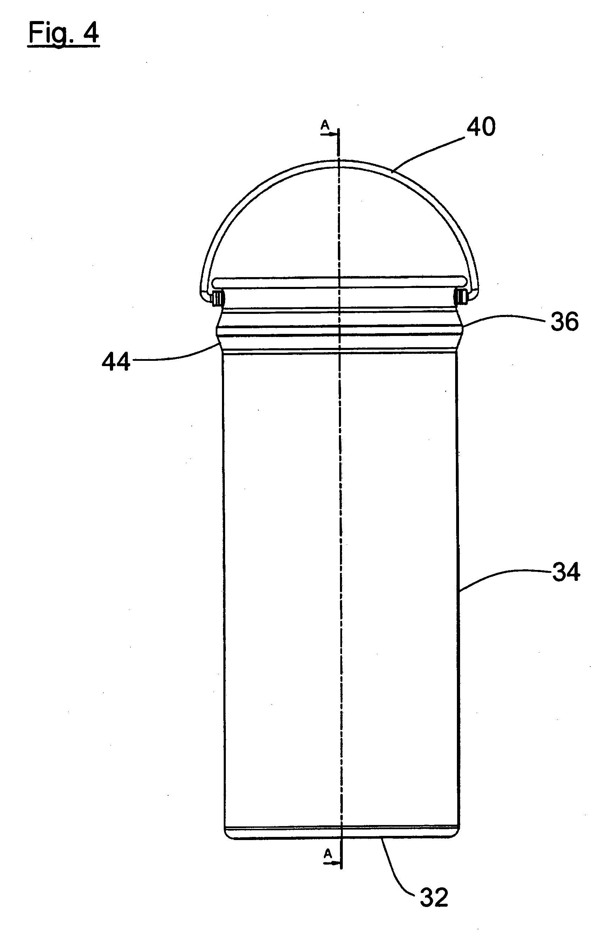

Fig. 4 zeigt eine Draufsicht auf den Innenbehälter 30, in der insbesondere die Geometrie des Wulstes 36 mit dem konischen Abschnitt 44 gut erkennbar ist. Ebenfalls eingezeichnet ist die Schnittebene A-A, die in der Fig. 3 dargestellt ist.

## Patentansprüche

1. Vorrichtung zum Temperieren von Kolostralmilch mit
• einem Außenbehälter (10), der einen Boden (28), einen unteren Abschnitt (12) und einen oberen, sich nach oben zu einer Öffnung (16) hin verjün-genden Abschnitt (14) aufweist, und
• einem Innenbehälter (30), der einen Boden (32), einen zylindrischen Abschnitt (34) und einen umlaufenden Wulst (26) aufweist, wobei der zylindrische Abschnitt (34) einen kleineren Durchmesser und der Wulst (36) einen größeren Durchmesser als die Öffnung (16) des Außenbehälters (10) aufweist und der Wulst (36) einen Abstand von dem Boden (32) des Innenbehälters (30) aufweist, der kleiner ist als der Abstand zwischen einem oberen Rand (18) der Öffnung (16) und dem Boden (28) des Außenbehälters (10).

2. Vorrichtung nach Anspruch 1, **dadurch gekennzeichnet, dass** die Öffnung (16) des Außenbehälters (10) einen zylindrischen Abschnitt (20) mit einer Höhe von 2 cm oder mehr aufweist und/oder dadurch, dass der Außenbehälter (10) aus Kunststoff besteht und/oder ein transparentes Material und/oder ein Fassungsvermögen von 201 bis 401 aufweist.

3. Vorrichtung nach Anspruch 1 oder 2, **dadurch gekennzeichnet, dass** der Außenbehälter (10) eine Füllstandsmarkierung aufweist, die einen Füllstand für den Außenbehälter (10) ohne eingesetzten Innenbehälter (28) markiert, bei dem sich nach dem Einsetzen des Innenbehälters (28) ein Füllstand des Außenbehälters (10) bis knapp unter den Öffnungsrand (18) ergibt.

4. Vorrichtung nach einem der Ansprüche 1 bis 3, **dadurch gekennzeichnet, dass** eine Verriegelung vorhanden ist, die ein Aufschwimmen des Innenbehälters verhindert, wobei die Vernegelung insbesondere einen Anschlag am Außenbehälter (10) und einen mit dem Anschlag zusammenwirkenden Rasthaken am Innenbehälter (30) umfasst oder umgekehrt.

5. Vorrichtung nach einem der Ansprüche 1 bis 4, **dadurch gekennzeichnet, dass** der obere Abschnitt (14) des Außenbehälters (10) konisch ist und/oder der untere Abschnitt (12) des Außenbehälters (10) kreiszylindrisch ist.

6. Vorrichtung nach einem der Ansprüche 1 bis 5, **dadurch gekennzeichnet, dass** der Durchmesser des unteren Abschnitts (12) des Außenbehälters (10) etwa doppelt so groß ist wie der Durchmesser der Öffnung (16) des Außenbehälters (10).

7. Vorrichtung nach einem der Ansprüche 1 bis 6, **dadurch gekennzeichnet, dass** der obere Abschnitt (14) des Außenbehälters (10) eine geringere Höhe aufweist als der untere Abschnitt (12) des Außenbehälters (10).

8. Vorrichtung nach einem der Ansprüche 1 bis 7, **dadurch gekennzeichnet, dass** der Außenbehälter (10) einen Henkel (24) aufweist, wobei der Henkel (24) insbesondere schwenkbar ist und Außenbehälter (10) und Henkel (24) so ausgebildet sind, dass der Henkel (24) in einer für das Tragen des Außenbehälters (10) geeigneten, aufgerichteten Stellung einrasten kann.

9. Vorrichtung nach Anspruch 8, **dadurch gekennzeichnet, dass** der Henkel (24) mindestens einen, gemeinsam mit dem Henkel (24) schwenkbaren Abschnitt aufweist, der in der aufgerichteten Stellung des Henkels (24) mit einem Anschlag am Innenbehälter (30) zusammenwirkt, um ein Aufschwimmen des Innenbehälters (30) zu verhindern.

10. Vorrichtung nach einem der Ansprüche 1 bis 9, **dadurch gekennzeichnet, dass** am oberen Abschnitt (14) des Außenbehälters (10) zwei gegenüberliegende Stege (22) angeordnet sind, in die jeweils ein Ende des Henkels (24) eingehängt ist.

11. Vorrichtung nach einem der Ansprüche 1 bis 10, **dadurch gekennzeichnet, dass** der Innenbehälter (30) aus Metall ist und/oder ein Fassungsvermögen von 5 1 bis 101 aufweist und/oder einen Deckel aufweist.

12. Vorrichtung nach einem der Ansprüche 1 bis 11, **dadurch gekennzeichnet, dass** der Durchmesser des zylindrischen Abschnitts (34) des Innenbehälters (30) nur wenig kleiner ist als der Innendurchmesser der Öffnung (16) des Außenbehälters (10).

13. Vorrichtung nach einem der Ansprüche 1 bis 12, **dadurch gekennzeichnet, dass** der Wulst (36) des Innenbehälters (30) von einer Ausbuchtung einer Wandung des Innenbehälters (30) gebildet ist und/oder dass der Innenbehälter (30) oberhalb des Wulsts (36) einen weiteren zylindrischen Abschnitt (38) aufweist, wobei der Innenbehälter (30) insbesondere einen Henkel (40) aufweist, der an dem weiteren zylindrischen Abschnitt (38) des Innenbehälters (30) befestigt ist.

14. Vorrichtung nach einem der Ansprüche 1 bis 13, **dadurch gekennzeichnet, dass** der Innenbehälter (30) oberhalb des Wulsts (36) einen nach außen umgebördelten Rand (42) aufweist.

15. Vorrichtung nach einem der Ansprüche 1 bis 14, **dadurch gekennzeichnet, dass** der Wulst (36) unterhalb seines maximalen Durchmessers einen sich nach unten verjüngenden, konischen Abschnitt (44) aufweist, wobei der konische Abschnitt (44) insbesondere einen Öffnungswinkel im Bereich von 30° bis 60° aufweist.

## Claims

1. A device for tempering colostrum milk with
• an outer reservoir (10), which has a bottom (28), a lower section (12) and an upper section (14) tapering upwards towards an opening (16) and
• an inner reservoir (30), which has a bottom (32), a cylindrical section (34) and a circumferential ridge (26), wherein the cylindrical section (34) has a smaller diameter and the ridge (36) a larger diameter than the opening (16) of the outer reservoir (10) and the ridge (36) has a distance from the bottom (32) of the inner reservoir (30), which is less than the distance between an upper edge (18) of the opening (16) and the bottom (28) of the outer reservoir (10).

2. The device according to claim 1, **characterized in that** the opening (16) of the outer reservoir (10) has a cylindrical section (20) with a height of 2 cm or more and/or **in that** the outer reservoir (10) is made of plastic and/or a transparent material and/or has a reservoir capacity of 20 1 to 40 1.

3. The device according to claim 1 or 2, **characterized in that** the outer reservoir (10) has a fill level marking, which marks a fill lever for the outer reservoir (10) without an inserted inner reservoir (30), in which a fill level of the outer reservoir (10) results up to just below the opening edge (18) when the inner reservoir (30) is inserted.

4. The device according to one of claims 1 through 3, **characterized in that** a lock is present, which prevents the inner reservoir from floating upwards, wherein the lock comprises a stop on the outer reservoir (10) and an engagement hook working together with the stop on the inner reservoir (30) or vice versa.

5. The device according to one of claims 1 through 4, **characterized in that** the upper section (14) of the outer reservoir (10) is conical and/or the lower section (12) of the outer reservoir (10) has a circular cylindrical.

6. The device according to one of claims 1 through 5, **characterized in that** the diameter of the lower section (12) of the outer reservoir (10) is approximately twice as large as the diameter of the opening (16) of the outer reservoir (10).

7. The device according to one of claims 1 through 6, **characterized in that** the upper section (14) of the outer reservoir (10) has a smaller height than the lower section (12) of the outer reservoir (10).

8. The device according to one of claims 1 through 7, **characterized in that** the outer reservoir (10) has a handle (24), wherein the handle (24) is in particular pivotable and the outer reservoir (10) and the handle (24) are designed such that the handle (24) can lock into an upright position suitable for carrying the outer reservoir (10).

9. The device according to claim 8, **characterized in that** the handle (24) has at least one section that is pivotable together with the handle (24), which works together with a stop on the inner reservoir (30) in the upright position of the handle (24), in order to prevent the inner reservoir (30) from floating up.

10. The device according to one of claims 1 through 9, **characterized in that** two bars (22) are arranged opposite-lying on the upper section (14) of the outer reservoir (10), in each of which one end of the handle (24) is hung.

11. The device according to one of claims 1 through 10, **characterized in that** the inner reservoir (30) is made of metal and/or has a reservoir capacity of 5 1 to 10 1 and/or has a cover.

12. The device according to one of claims I through 11, **characterized in that** the diameter of the cylindrical section (34) of the inner reservoir (30) is only slightly smaller than the inner diameter of the opening (16) of the outer reservoir (10).

13. The device according to one of claims 1 through 12, **characterized in that** the ridge (36) of the inner reservoir (30) is formed by a bulge of a wall of the inner reservoir (30) and/or that the inner reservoir (30) has another cylindrical section (38) above the ridge (36), wherein the inner reservoir (30) has in particular a handle (40), which is fastened on the additional cylindrical section (38) of the inner reservoir (30).

14. The device according to one of claims 1 through 13, **characterized in that** the inner reservoir (30) has an edge flanged towards the outside above the ridge (36).

15. The device according to one of claims 1 through 14, **characterized in that** the ridge (36) has a downwardly tapering, conical section (44) below its maximum diameter, wherein the conical section (44) has in particular an opening angle in the range of 30° to 60°.

## Revendications

1. Dispositif de tempérage du premier lait de jument, avec
• un récipient extérieur (10) comportant un fond (28), une section inférieure (12) et une section supérieure (14) s'affinant vers le haut en direction d'une ouverture (16), et
• un récipient intérieur (30) comportant un fond (32), une section cylindrique (34) et un bourrelet périphérique (26), la section cylindrique (34) présentant un plus petit diamètre et le bourrelet (36) un plus grand diamètre que l'ouverture (16) du récipient extérieur (10), et le bourrelet (36) présentant un espacement par rapport au fond (32) du récipient intérieur (30), lequel est plus petit que l'espacement entre un bord supérieur (18) de l'ouverture (16) et le fond (28) du récipient extérieur (10).

2. Dispositif selon la revendication 1, **caractérisé en ce que** l'ouverture (16) du récipient extérieur (10) comporte une section cylindrique (20) d'une hauteur de 2 cm ou plus, et/ou **en ce que** le récipient extérieur (10) est constitué de plastique et/ou comporte un matériau transparent et/ou une capacité volumétrique de 201 à 401.

3. Dispositif selon la revendication 1 ou 2, **caractérisé en ce que** le récipient extérieur (10) comporte un repère de niveau de remplissage indiquant un niveau de remplissage pour le récipient extérieur (10) en l'absence du récipient intérieur (30), donnant un niveau de remplissage du récipient extérieur (10) arrivant juste en-dessous du bord de l'ouverture (18) après l'insertion du récipient intérieur (30).

4. Dispositif selon l'une des revendications 1 à 3, **caractérisé en ce qu'**il est prévu un verrouillage empêchant le récipient intérieur de flotter, dans lequel le verrouillage comprend en particulier une butée sur le récipient extérieur (10) et un crochet de crantage sur le récipient intérieur (30) destiné à coopérer avec la butée, ou inversement.

5. Dispositif selon l'une des revendications 1 à 4, **caractérisé en ce que** la section supérieure (14) du récipient extérieur (10) est conique et/ou la section inférieure (12) du récipient extérieur (10) est cylindrique circulaire.

6. Dispositif selon l'une des revendications 1 à 5, **caractérisé en ce que** le diamètre de la section inférieure (12) du récipient extérieur (10) est environ deux fois supérieur au diamètre de l'ouverture (16) du récipient extérieur (10).

7. Dispositif selon l'une des revendications 1 à 6, **caractérisé en ce que** la section supérieure (14) du récipient extérieur (10) présente une hauteur plus petite que celle de la section inférieure (12) du récipient extérieur (10).

8. Dispositif selon l'une des revendications 1 à 7, **caractérisé en ce que** le récipient extérieur (10) comprend une anse (24), dans lequel l'anse (24) est en particulier pivotante et le récipient extérieur (10) et l'anse (24) sont conçus de manière à ce que l'anse (24) puisse s'enclencher dans une position verticale appropriée pour porter le récipient extérieur (10).

9. Dispositif selon la revendication 8, **caractérisé en ce que** l'anse (24) comporte au moins une section apte à pivoter ensemble avec l'anse (24), qui, dans la position verticale de l'anse (24), coopère avec une butée sur le récipient intérieur (30) afin d'empêcher le récipient intérieur (30) de flotter.

10. Dispositif selon l'une des revendications 1 à 9, **caractérisé en ce que** sur la section supérieure (14) du récipient extérieur (10) sont agencées deux entretoises (22) opposées, dans lesquelles est accrochée respectivement une extrémité de l'anse (24).

11. Dispositif selon l'une des revendications 1 à 10, **caractérisé en ce que** le récipient intérieur (30) est constitué de métal et/ou présente une capacité volumétrique de 5 1 à 10 1 et/ou comporte un couvercle.

12. Dispositif selon l'une des revendications 1 à 11, **caractérisé en ce que** le diamètre de la section cylindrique (34) du récipient intérieur (30) est seulement légèrement inférieur au diamètre intérieur de l'ouverture (16) du récipient extérieur (10).

13. Dispositif selon l'une des revendications 1 à 12, **caractérisé en ce que** le bourrelet (36) du récipient intérieur (30) est formé par un renflement d'une paroi du récipient intérieur (30), et/ou **en ce que** le récipient intérieur (30) comporte une autre section cylindrique (38) au-dessus du bourrelet (36), dans lequel le récipient intérieur (30) comporte en particulier une anse (40) fixée à l'autre section cylindrique (38) du récipient intérieur (30).

14. Dispositif selon l'une des revendications 1 à 13, **caractérisé en ce qu'**au-dessus du bourrelet (36), le récipient intérieur (30) comporte un bord (42) rabattu vers l'extérieur.

15. Dispositif selon l'une des revendications 1 à 14, **caractérisé en ce qu'**en-dessous de son diamètre maximal, le bourrelet (36) comporte une section conique (44) s'affinant vers le bas, dans lequel la section conique (44) présente en particulier un angle d'ouverture comprise entre 30° et 60°.
